# EUROPEAN PATENT APPLICATION

(11) **EP 1 400 690 A2**
(43) Date of publication of application: **24.03.2004**
(21) Application number: 03255709.2
(22) Date of filing: 12.09.2003
(51) Int. Cl.: F04B 39/10, F16K 15/04

(54) **Non-return valves for vacuum pumps**

(30) Priority: 20.09.2002 GB 0221918; 08.09.2003 GB 0321051
(71) Applicant: The BOC Group plc, Windlesham Surrey GU20 6JH (GB)
(72) Inventor: Savidge, Derek, West Sussex, BN43 5NJ (GB); North, Philip, Horsham, West Sussex, RH12 2NZ (GB); Turner, Neil, Godalming, Surrey, GU8 5EG (GB)
(74) Representative: Booth, Andrew Steven

(57) **Abstract**

A vacuum pump non-return valve comprises a valve body (12) that defines a through-passage having an inlet side (14i) and an outlet side (14e). A valve seat (16) is disposed intermediate said inlet and outlet sides of the through-passage. The valve seat (16) is defined by an insert made of an elastomeric material. The non-return valve has a ball (18) arranged to seat against the valve seat to prevent the passage of gaseous fluids from the outlet side (14e) to the inlet side (14i). The ball is displaceable, in use, from valve seat by pressurised gaseous fluid in the inlet side of the through-passage to permit passage of gaseous fluid from the inlet side to the outlet side of the through-passage.

## Description

The invention relates to non-return valves for vacuum pumps.

Non-return valves, sometimes referred to as check valves, are commonly used with vacuum pumps. A non-return valve is most often used on the exhaust side of a dry vacuum pump and is arranged to permit gas/vapour to exhaust from the pump and prevent backflow of the gas/vapour.

A known non-return valve makes use of a ball working against gravity. In use, the ball seats against a valve seat until such time as the exhaust pressure is sufficient to lift the ball from the seat against gravity. As long as the exhaust pressure is sufficient to hold the ball off the seat, the valve is open to permit the passage of gas/vapour from the pump. If the exhaust pressure falls to the extent it cannot support the ball against gravity, the ball falls back against the valve seat to prevent backflow of gas/vapour into the pump.

The valve seat of the known non-return valve is made of metal and in order to provide good gas sealing properties, the ball is either made of elastomeric material, or comprises a metal former coated with an elastomeric material. The elastomer is required to be sufficiently compliant to provide a good gas seal.

The known non-return valve works well, but there are problems encountered when corrosive gases/vapours are pumped. An example of such a gas vapour is one containing fluorine. The elastomeric compounds normally used in vacuum pump sealing, such as fluoroelastomers, for example, Viton (Trade Name), are prone to attack by the fluorine content of vacuum pump exhaust. The metal components are also attacked by these corrosive gases/vapours, but are typically much more resistant than the elastomeric compounds normally used.

In order to cope with pumping corrosive gases/vapours, elastomers having an increased resistance to attack can be used. Examples of elastomers with increased resistance to fluorine attack are perfluoroelastomers, such as Chemraz (Registered Trade Mark) and Kalrez (Registered Trade Mark). However, these materials are significantly more expensive than the more commonly used materials such as Viton and while a satisfactory ball made of solid Chemraz or Kelraz can be produced, this adds enormously to the cost of producing a non-return valve.

In cases where the ball is to be made by coating a metal former, the cost problem can be reduced, but the choice of elastomers that can be used is limited by the requirement that they must be capable of over-moulding onto a metal former.

An object of the invention is to at least partially overcome one or more of the above-described problems and/or provide a useful choice.

The invention provides a vacuum pump non-return valve comprising a valve body that defines a through-passage having an inlet end and an outlet end, characterised by an annular elastomeric insert located on the valve body intermediate the inlet and outlet ends and defining a valve seat and a ball arranged to seat against the valve seat to prevent passage of gaseous fluids from the outlet end to the inlet end and being displaceable, in use, from the valve seat by pressurised gaseous fluid in the inlet end to permit passage of the gaseous fluid from the inlet end to the outlet end.

The invention also provides a vacuum pump non-return valve comprising a valve body that defines a through-passage having an inlet end and an outlet end, a valve seat disposed intermediate said inlet and outlet ends defined by an insert made of an elastomeric material, and a ball arranged to seat against said valve seat to prevent passage of gaseous fluids from said outlet end to said inlet end and being displaceable, in use, from said valve seat by pressurised gaseous fluid in said inlet end to permit passage of said gaseous fluid from said inlet end to said outlet end.

Desirably, the ball is made of metal. The ball may be coated with a non-stick material to prevent sticking to the valve seat. In an alternative arrangement, the ball may be made of an inert, polymeric material, such as PTFE. As a further alternative, the ball may be made of a ceramic material.

The insert is preferably an O-ring. The insert may be made of a fluoroelastomer, or a perfluoroelastomer.

The valve body is preferably a casting.

The invention also includes a vacuum pump non-return valve, the valve comprising a cast body part having an inlet, an outlet and a location for receiving an insert, an insert made of an elastomeric material located at the location and a ball, the insert defining a valve seat and the ball being arranged to seat on the valve seat to prevent passage of gaseous fluids from the outlet to the inlet and being displaceable, in use, from the valve seat by gas pressure acting on an upstream facing side thereof to permit the gaseous fluid to pass from the inlet to the outlet.

The invention extends to a vacuum pump, preferably a dry vacuum pump, provided with a non-return valve as aforementioned.

The invention also includes a vacuum pump having a part defining a flowpath for gaseous fluids and a non-return valve in said flowpath, said non-return valve comprising a valve seat insert and a ball, said valve seat insert being made of an elastomeric material and being positioned relative to said flowpath such that when, in use, said ball is seated on the valve seat, the flow of gaseous fluids in said flowpath is prevented and when there is a predetermined gas pressure in said flowpath upstream of the non-return valve, the ball is moved from said valve seat by gas pressure so that the gaseous fluid can flow to positions of the flow path downstream of the non-return valve.

The invention also includes a vacuum pump comprising a non-return valve in a flowpath for gaseous fluids exhausted from the pump, the valve comprising a valve seat insert and a ball characterised in that said valve seat insert is made of an elastomeric material and is positioned relative to said flowpath such that when, in use, said ball is seated on the valve seat insert, the flow of gaseous fluids in said flowpath is prevented and when there is a predetermined gas pressure in said flowpath upstream of the ball, the ball is moved from said valve seat insert by gas pressure so that the gaseous fluid can flow in said flowpath downstream of the ball.

The invention also includes a method of preventing backflow of exhaust gas to a vacuum pump, said method comprising providing a valve seat consisting of an insert made of an elastomeric material in a flowpath for said exhaust gas and providing a ball on said valve seat to prevent passage of said exhaust gas, the ball being arranged such that it seats against said valve seat under the influence of gravity and is displaceable against gravity by gas pressure upstream of said ball valve.

Where the valve seat is to be exposed to gases/vapours containing aggressive media such as fluorine the elastomeric material is advantageously selected from a compound having improved resistance to chemical attack. Examples of suitable compounds are Chemraz, Kalrez or Simriz. However, the invention is not to be taken as limited to these compounds and valve seats made from elastomeric materials having the desired properties for a particular pumping environment can readily be substituted as required.

In order that the invention may be well understood, an embodiment thereof, which is given by way of example only, will now be described with reference to the drawings in which:
Figure 1 is a sectioned side elevation of a non-return valve mounted to a vacuum pump; and
Figure 2 is a view corresponding to Figure 1 showing a modified version of the non-return valve.

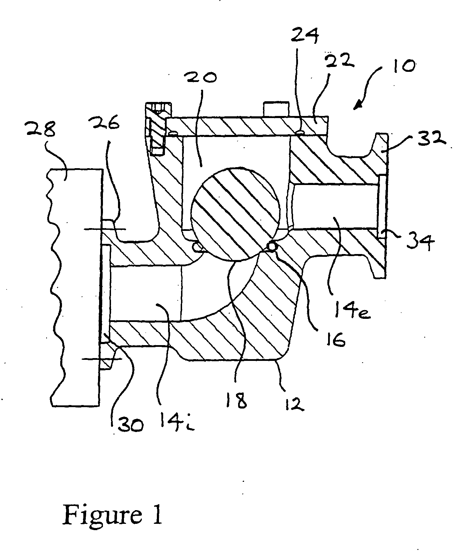

Referring to Figure 1, a non-return valve 10 comprises a valve body 12. The valve body is typically a hollow metal casting. The valve body 12 defines a through-passage having an inlet side 14i and an outlet side 14e. Between the inlet side 14i and the outlet side 14e, there is a valve seat 16 defined by an O-ring on which is seated a ball 18. Above the valve seat 16 on the outlet side 14e side of the non-return valve, there is a chamber 20 into which the ball can rise. The chamber 20 is open at its outer end to permit the insertion and removal of a core during the casting process. The open end of the chamber 20 is closed by a plate 22 that is secured to the valve body by means of cap-head socket screws or the like. The plate 22 seals against a seal 24 that is provided between the valve body 12 and the plate to provide a gas-tight seal.

A flange 26 is provided at the outer end of the inlet side 14i of the through-passage, i.e. the end that is remote from the valve seat 16. The flange is provided with suitable through-holes (not shown) through which screws can pass to allow the non-return valve to be secured to a vacuum pump 28. A recess 30 is provided in the flange 26 to receive a seal, such as an O-ring, to provide a gas-tight seal between a vacuum pump 28 and the flange 26. Similarly, the outer end of the outlet side 14e of the through-passage is provided with a flange 32 and a recess 34 to permit a gas-tight connection to be made to downstream apparatus, or a conduit leading to such apparatus. An example of apparatus that might be connected downstream of the non-return valve is an abatement system.

At the lower, or inner end, of the chamber 20, the valve body 12 defines a shoulder in which the O-ring 16 seats. The O-ring comprises any suitable elastomeric compound. If the non-return valve is to be used to pump aggressive fluorine containing gases/vapours, the O-ring should be made of a suitably resistant compound, such as Chemraz or Kalrez.

The ball may be made from a metal, such as a stainless steel or other suitable metal, which will usually be selected for its resistance to corrosion. However, a metal ball will require a certain amount of pressure to be built up behind it before moving and thus activating the valve. In a further embodiment an inert polymeric material such as solid polytetrafluoroethylene (PTFE) may be used to form the ball. A ball formed from such a material will be significantly lighter than the equivalent metal ball such that the pressure required to lift the ball is reduced. In this way a valve is provided that is more sensitive to pressure fluctuations and, consequently, the magnitude of the back pressure seen by the pump exhaust will be reduced. Further advantages are provided by such an approach in that a polymeric ball will not only be lighter but will be cheaper and easier to manufacture and in use will result in a significantly quieter device.

As an alternative, ceramic may be used to form the ball.

In use, when the pump 28 is pumping, exhaust gases pass from the pump into the inlet side 14i of the through-passage and provided there is sufficient pressure, the ball 18 is lifted from the O-ring that defines the valve seat 16, permitting the passage of the exhaust gases into the lower end of the chamber 20 and from there into the outlet side 14e of the through passage, from where the gases pass from the non-return valve. If the pressure from the pump 28 falls to the extent it is insufficient to support the ball 18, the ball falls back against the valve seat 16 under the influence of gravity. When the ball 18 seats against the valve seat 16 defined by the O-ring, a substantially gas-tight seal is provided between the sides 14i, 14e of the through-passage, thereby preventing the backflow of gases into the pump 28.

It will be appreciated that the valve body 12 may take many forms. For example, it is not essential to provide the outlet side 14e of the through-passage as shown. instead, the chamber 20 could define the outlet end of the through-passage, by removing the plate 22. In such an arrangement, there would typically be a flange similar to the flanges 26, 32, provided in the region occupied by the plate 22 in Figure 1.

It will be appreciated that where expensive compounds such as Chemraz or Kalrez are to be used, the non-return valve 10 has advantages over the known valve provided with a solid elastomeric ball. As indicated previously, compounds such as Chemraz and Kalrez are expensive and it is estimated that a valve seat 16 in the form of an O-ring made from such materials will cost in the region of 7% of the cost of a solid ball made from the same material.

A further advantage of the non-return valve shown in Figure 1, as compared with a valve using a ball comprising a metal former coated with a compound, is that it is not limited to using compounds that are capable of being moulded onto a metal former. Thus, in terms of selecting a suitable compound for a particular operating environment, the freedom of the designer is enhanced

Furthermore, because the designer is not so much constrained by cost of the compound or the need for the compound to be capable of moulding onto a former, when new elastomers having improved qualities become available, it is relatively straightforward to bring them into use in the non-return valve.

It is to be understood that while the valve seat 16 is conveniently defined by an O-ring as shown in Figure 1, the valve seat can be defined by insert seals having a different configuration, should this be required and/or desirable.

It will be appreciated that the ball while made of metals may be coated with a non-stick material to prevent it from sticking to the valve seat 16. An example of a suitable non-stick material is polytrifluorochloroethylene (PTFE).

It will be understood that whilst the embodiment is described as having flanges, which allow the non-return valve to be secured to a vacuum pump and piping leading from the vacuum pump by means of screws or the like, this is not to be taken as limiting. For example, the valve body could be provided with threading so that the valve could be screwed directly to cooperating threading on a vacuum pump.

It will also be appreciated that the non-return valve may be provided by fitting the insert valve seat 16 and ball 18 into a passage defined in a pump and in this case, the pump, or a part of the pump, will define the valve body 12.

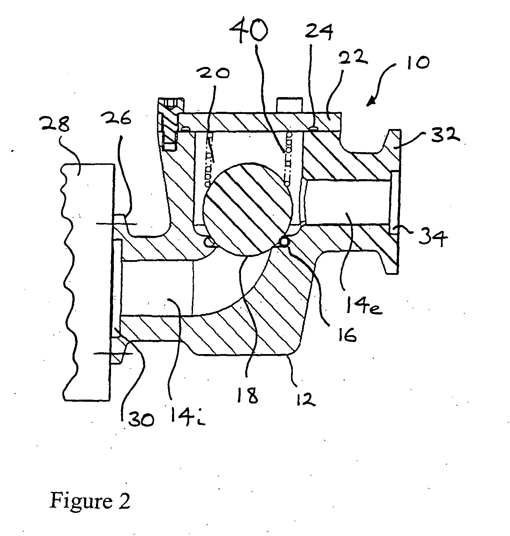

A possible modification to the non-return valve 10 is shown in Figure 2. The modification comprises the provision of a compression spring 40 between the ball 18 and the plate 22. The spring 40 is arranged to bias the ball to a position in which it engages the valve seat 16 defined by the O-ring. It will be appreciated that spring can be selected such that the ball will not lift from the valve seat until the pressure of the gas/vapour in the inlet side 14i of the through-passage at least reaches a predetermined threshold and the presence of the spring will ensure that if the pressure in the inlet side falls below that threshold pressure, the ball will promptly be pressed back against the valve seat to prevent the backflow of gas/vapour from the outlet side 14e to the inlet side 14i.

In summary, a vacuum pump non-return valve comprises a valve body (12) that defines a through-passage having an inlet side (14i) and an outlet side (14e). A valve seat (16) is disposed intermediate said inlet and outlet sides of the through-passage. The valve seat (16) is defined by an insert made of an elastomeric material. The non-return valve has a ball (18) arranged to seat against the valve seat to prevent the passage of gaseous fluids from the outlet side (14e) to the inlet side (14i). The ball is displaceable, in use, from the valve seat by pressurised gaseous fluid in the inlet side of the through-passage to permit passage of gaseous fluid from the inlet side to the outlet side of the through-passage.

## Claims

1. A vacuum pump non-return valve comprising a valve body (12) that defines a through-passage having an inlet end (14i) and an outlet end (14e), **characterised by** an annular elastomeric insert located on the valve body (12) intermediate the inlet and outlet ends and defining a valve seat (16), and a ball (18) arranged to seat against the valve seat to prevent passage of gaseous fluids from the outlet end (14e) to the inlet end (14i) and being displaceable, in use, from the valve seat (16) by pressurised gaseous fluid in the inlet end to permit passage of the gaseous fluid from the inlet end to the outlet end.

2. A valve as claimed in claim 1, wherein said ball (18) is made of one of the group of metal, polymer and ceramic.

3. A valve as claimed in claim 2, wherein said ball (18) is coated with a non-stick material to prevent sticking to said valve seat (16).

4. A valve as claimed in claims 1, 2 or 3, wherein said insert is an O-ring.

5. A valve as claimed in any one of the preceding claims, wherein said insert is made of one of fluoroelastomer and perfluoroelastomer.

6. A valve as claimed in any one of the preceding claims, wherein said valve body is a casting.

7. A vacuum pump provided with a non-return valve as claimed in any one of the preceding claims.

8. A vacuum pump (28) comprising a non-return valve (10) in a flowpath for gaseous fluids exhausted from the pump (28), the valve (10) comprising a valve seat insert (16) and a ball (18), **characterised in that** said valve seat insert (16) is made of an elastomeric material and is positioned relative to said flowpath such that when, in use, said ball (18) is seated on the valve seat insert (16), the flow of gaseous fluids in said flowpath is prevented and when there is a predetermined gas pressure in said flowpath upstream of the ball (18), the ball is moved from said valve seat insert (16) by gas pressure so that the gaseous fluid can flow in said flowpath downstream of the ball (18).

9. A pump according to Claim 8, wherein the insert comprises an annular elastomeric insert located intermediate an inlet end (14i) and an outlet end (14e) of the flowpath.

10. A method of preventing backflow of exhaust gas to a vacuum pump, said method being **characterised by** comprising providing a valve seat (16) consisting of an insert made of an elastomeric material in a flowpath for said exhaust gas, and providing a ball (18) on said valve seat (16) to prevent passage of said exhaust gas, the ball being arranged such that it seats against said valve seat under the influence of gravity and is displaceable against gravity by gas pressure upstream of said ball (18).
